# EUROPEAN PATENT SPECIFICATION

(11) **EP 0 558 124 B1**
(45) Date of publication and mention of the grant of the patent: **08.05.1996**
(21) Application number: 93200462.5
(22) Date of filing: 18.02.1993
(51) Int. Cl.: H02P 7/00

(54) **Integrated circuit comprising a unit for controlling a load of an inductive nature**
Integrierte Schaltung mit einer Einheit zur Regelung einer Belastung mit einem induktiven Charakter
Circuit intégré muni d'une unité pour régler une charge de nature inductive

(30) Priority: 26.02.1992 EP 92200557
(43) Date of publication of application: 01.09.1993
(73) Proprietor: Philips Electronics N.V., 5621 BA Eindhoven (NL)
(72) Inventor: Bahlmann, Johannes Petrus Maria, NL-5656 AA Eindhoven (NL)
(74) Representative: Schoonheijm, Harry Barend

(56) References cited:
- US-A- 4 924 158
- ELEKTOR ELECTRONICS vol. 13, no. 150, November 1987, CANTERBURY GB pages 62 - 64 A. WOLFSGRUBER 'PRECISE MOTOR SPEED REGULATOR'

## Description

The invention relates to an integrated circuit comprising a unit for controlling a load of an inductive nature, which unit comprises a first output transistor having a first control electrode and a first main current path, a second output transistor having a second control electrode and a second main current path, a control stage for controlling the output transistors, a first supply terminal for receiving a first supply voltage, a second supply terminal for receiving a second supply voltage, and an output terminal for connecting the load, the first and the second control electrode being coupled to the control stage, the first main current path being coupled between the first supply terminal and the output terminal, and the second main current path being coupled between the output terminal and the second supply terminal.

Such an integrated circuit comprising a unit for controlling a load of an inductive nature can be used *inter alia* in a personal computer wherein the load is constituted by a motor of a disc drive.

Such an integrated circuit comprising a unit for controlling a load of an inductive nature is known *inter alia* from a chip which is commercially available under the type number TDA 5140 (Philips) at the time of filing of the present document. When a load of an inductive nature is connected to the output terminal of the known unit an undesired voltage transient is produced on the output terminal when a current flowing through the load is interrupted by means of the output transistors, which voltage transients is caused by the inductive nature. In order to preclude the undesired voltage transient the known unit comprises a first diode coupled parallel to the first main current path and a second diode coupled parallel to the second main current path, the first diode allowing the passage of a current flowing through the load after an interruption by means of the second transistor, and the second diode allowing the passage of a current flowing through the load after an interruption by means of the first transistor. As a result of the conduction of the first diode the undesired voltage transient on the output terminal is limited to a first voltage which differs by one diode voltage from the first supply voltage and as a result of the conduction of the first diode the undesired voltage transient on the output terminal is limited to a second voltage which differs by one diode voltage from the second supply voltage.

However, a disadvantage of the known integrated circuit comprising a unit for controlling a load of an inductive nature is that the first or the second voltage gives rise to a parasitic effect causing the known integrated circuit to function in an undesirable manner.

It is an object of the invention to provide an integrated circuit comprising a unit for controlling a load of an inductive nature, which integrated circuit does not exhibit said parasitic effect.

In accordance with the invention an integrated circuit comprising a unit for controlling a load of an inductive nature is characterised in that the control stage is coupled to the output terminal and is adapted to detect a first voltage transient on the output terminal, to turn on the second transistor in response to the first voltage transient, to detect a second voltage transient on the output terminal, which second voltage transient is opposed to the first voltage transient, and to turn off the second transistor in response to the second voltage transient.

The invention is based on the recognition that the parasitic effect is caused by the fact that in the known integrated circuit the first or the second supply terminal is connected to a substrate of the integrated circuit. Since the substrate is connected to the relevant supply terminal the substrate is at a substrate voltage dual to the supply voltage carried by the relevant supply terminal. When the undesired voltage transient on the output terminal is limited to a voltage which differs one diode voltage from the supply voltage which is equal to the substrate voltage, the voltage as a result of the undesired voltage transient produces the parasitic effect caused by a plurality of parasitic transistors, which parasitic transistors cause the known integrated circuit to function in an undesired manner. Since the unit of the integrated circuit in accordance with the invention comprises the control stage which upon detection of the first voltage transient turns on the second output transistor and upon detection of the second voltage transient turns off the second output transistor, the undesired voltage transient is limited to a voltage which differs less than

one diode voltage from the relevant supply voltage, which voltage does not give rise to the parasitic effect. In the on-state the second output transistor operates in an inverse manner, the current through the load flowing from the second supply terminal to the output terminal.

A further embodiment of an integrated circuit comprising a unit for controlling a load of an inductive nature may be characterised in that the control stage is further adapted to detect a third voltage transient on the output terminal, which third voltage transient is opposite to the first voltage transient, to turn on the first transistor in response to the third voltage transient, to detect a fourth voltage transient on the output terminal, which fourth voltage transient is opposed to the third voltage transient, and to turn off the first transistor in response to the fourth voltage transient. An advantage of the present embodiment is that the unit limits the undesired voltage transient on the output terminal upon an interruption of the current through the load both by means of the second transistor and by means of the first transistor. For example, when an integrated circuit is operated in a critical voltage range dictated by the first and the second supply voltage, which critical voltage range is to be understood to mean a voltage range near a breakdown voltage of the integrated circuit, the unit provides additional protection to prevent a breakdown voltage fatal to the integrated circuit from occurring on the output terminal. In the same way as the second output transistor the first output transistor operates inversely during the on-state, the current through the load flowing from the first supply terminal to the output terminal.

A further embodiment of an integrated circuit comprising a unit for controlling a load of an inductive nature in accordance with the invention may be characterised in that the control stage further comprises a capacitor having a first and a second terminal, the first terminal being coupled to the output terminal and the second terminal being coupled to the second control electrode with a phase shifter or without a phase shifter depending upon a voltage appearing across the second output transistor. An advantage of the control stage provided with the capacitor is an improved stability, because the capacitor provides feedback from the output terminal to the control stage. However, since the second transistor is operated inversely as a result of the first voltage transient a phase jump is produced on the output terminal, by means of which phase jump the capacitor is switched so as to guarantee the stability during the first voltage transient.

A further embodiment of an integrated circuit comprising a unit for controlling a load of an inductive nature in accordance with the invention may be characterised in that the control stage further comprises a first comparator for detecting the voltage appearing across the second output transistor and for controlling a first transistor so as to switch over the second terminal. During the first voltage transient the second terminal of the capacitor is disconnected from a first point in the control stage by means of the first transistor, to which first point the second terminal is connected during a time interval outside the first and the second voltage transient, whereas during the second voltage transient the second terminal of the capacitor is coupled to the first point in the control stage.

A further embodiment of an integrated circuit comprising a unit for controlling a load of an inductive nature in accordance with the invention may be characterised in that the control stage further comprises a second comparator for detecting the voltage appearing across the second output transistor and for controlling a second transistor so as to switch over the second terminal. During the first voltage transient the second terminal of the capacitor is coupled to a second point in the control stage by means of the second transistor, to which second point the second terminal is connected during a time interval between the first and the second voltage transient, whereas during the second voltage transient the second terminal of the capacitor is disconnected from the second point in the control stage.

A further embodiment of an integrated circuit comprising a unit for controlling a load of an inductive nature in accordance with the invention may be characterised in that the control stage further comprises a further comparator for detecting the first voltage transient and for controlling a further transistor so as to turn on the second output transistor. The further comparator constitutes a simple means for detecting the first voltage transient and controlling the second output transistor. The further comparator can be constructed, for example, by means of a differential amplifier having its first input coupled to the output terminal, having its second input coupled to a reference terminal, and having its output coupled to a control electrode of the further transistor.

A further embodiment of an integrated circuit comprising a unit for controlling a load of an inductive nature in accordance with the invention may be characterised in that the further comparator is further adapted to detect the second voltage transient and to control the further transistor so as to turn off the second output transistor. Apart from a simple means for detecting the first voltage transient the further comparator also constitutes a simple means for detecting the second voltage transient and controlling the second output transistor, particularly when the comparator is implemented by means of said differential amplifier.

A further embodiment of an integrated circuit comprising a unit for controlling a load of an inductive nature in accordance with the invention may be characterised in that the unit further comprises a first diode and a second diode, which first diode is coupled between the first supply terminal and the output terminal and which second diode is coupled between the output terminal and the second supply terminal. Although the integrated circuit in accordance with the invention is effectively protected by the novel control stage the diodes provide additional protection against a sudden voltage surge on the output terminal.

The above and other (more detailed) features of the invention will now be described more elaborately with reference to the accompanying drawing, in which
Figure 1 shows diagrammatically an embodiment of a circuit for controlling a load of an inductive nature in accordance with the invention, and
Figure 2 shows a more detailed embodiment of a circuit for controlling a load of an inductive nature in accordance with the invention.

In these Figures like parts bear the same reference numerals.

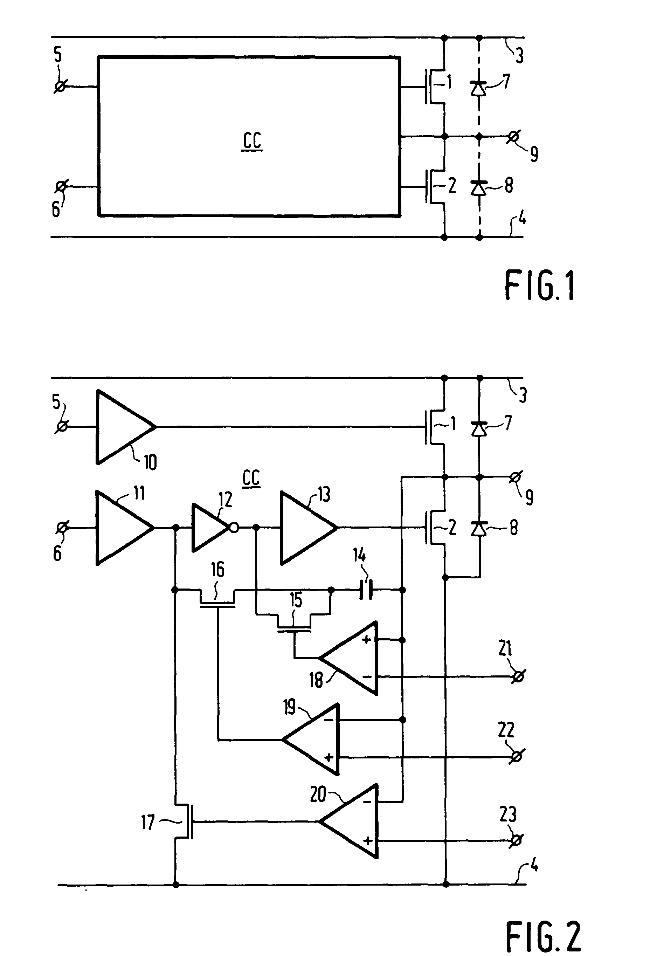

Figure 1 shows diagrammatically an embodiment of a circuit for controlling a load of an inductive nature in accordance with the invention. This embodiment comprises a first output transistor 1 having a first control electrode and a first main current path, a second output transistor 2 having a second control electrode and a second main current path, a control stage CC, a first supply terminal 3, a second supply terminal 4, a first input terminal 5, a second input terminal 6, a first diode 7, a second diode 8, and an output terminal 9, the first (1) and the second (2) control electrode and the input terminals 5 and 6 being coupled to the control stage CC, the first main current path (1) and the diode 7 being coupled in parallel between the supply terminal 3 and the output terminal 9, and the second main current path (2) and the diode 8 being coupled in parallel between the output terminal 9 and the supply terminal 4. Although the embodiment shown in Fig. 1 comprises the input terminals 5 and 6 it is generally possible to provide only one input terminal depending on the implementation chosen for the control stage CC. With regard to the diodes 7 and 8 shown in Fig. 1 it is to be noted that the diodes merely provide additional protection against a sudden current surge on the output terminal 9, which additional protection may be dispensed with. In the following description with reference to Fig. 1 it has been assumed that a first signal for controlling the output transistor 1 is applied to the input terminal 5 and a second signal for controlling the output transistor 2 is applied to the input terminal 6 and a load of an inductive nature is coupled to the output terminal 9. When the first signal turns on the output transistor 1 the output transistor 2 will be in an off-state. When the second signal turns on the output transistor 2 the output transistor 1 will be in an off-state. However, the control stage CC is adapted to limit an undesired voltage transient on the output terminal 9, which voltage transient occurs when the output transistor 1 or the output transistor 2 is driven from its on-state to its off-state. The undesired voltage transient is caused by the inductive nature of the load coupled to the output terminal 9, which inductive nature tends to sustain a current through the load in the case of an interruption. When the undesired voltage transient produces on the output terminal 9 a voltage exceeding one of the supply voltages, the voltage may cause an undesired operation of the integrated circuit as a result of a parasitic effect, particularly if the first or the second supply terminal (3, 4) is connected to a substrate of the integrated circuit. Since the substrate is connected to the relevant supply terminal the substrate will be at a substrate voltage equal to the supply voltage on the relevant supply terminal. When the undesired voltage transient on the output terminal differs by more than one diode voltage from the supply voltage which is equal to the substrate voltage, the undesired voltage transient gives rise to a parasitic effect formed by a plurality of parasitic transistors, which parasitic transistors cause a prior-art integrated circuit to operate in an undesirable manner. Since the unit of the integrated circuit in accordance with the invention comprises the control stage CC, which first turns on the second output transistor 2 upon detection of a first voltage transient on the output terminal 9 and which subsequently turns off the second output transistor 2 upon detection of a second voltage transient on the output terminal 9, the undesired voltage transient is limited to a voltage which differs by less than one diode voltage from the relevant supply voltage, as a result of which the parasitic effect does not occur. As the first voltage transient is opposed to the second voltage transient the two voltage transients can be detected simply. During the on-state the output transistors 1 and 2 operate inversely, *i.e.* the drain (collector) and the source (emitter) of the output transistors are interchanged. The voltage on the output voltage can be limited adequately by giving the output transistors 1 and 2 a low conductance value.

Figure 2 shows a more detailed embodiment of a circuit for controlling a load of an inductive nature in accordance with the invention. The present embodiment is constructed to receive a positive voltage on the supply terminal 3 and a negative voltage on the supply terminal 4, which negative supply voltage may be equal to, for example, the substrate voltage. In addition to the elements shown in Fig. 1 the present embodiment comprises a control stage CC adapted to control only the output transistor 2. The input terminal 5 is coupled to the first control electrode (1) by means of a buffer 10 and the input terminal 6 is coupled to the second control electrode (2) by means of a buffer 11, an inverter 12 and a buffer 13, the buffer 11, the inverter 12 and the buffer 13 forming a first section of the control stage CC for the output transistor 2. The first section is used both for controlling the output transistor 2 and for limiting the voltage on the output terminal 9. A second section of the control stage CC for the output transistor 2 comprises a capacitor 14, a first transistor 15 having a control electrode and a main current path, a second transistor 16 having a control electrode and a main current path, a third transistor 17 having a control electrode and a main current path, a first comparator 18 having an inverting input, a non-inverting input and an output, a second comparator 19 having an inverting input, a non-inverting input and an output, a further comparator 20 having an inverting input, a non-inverting input and an output, a first reference terminal 21 for receiving a first reference voltage, a second reference terminal 22 for receiving a second reference voltage, and a third reference terminal 23 for receiving a third reference voltage. In the present embodiment the capacitor 14 plays a central role in order to achieve the required stability for the unit, a first terminal of the capacitor 14 being coupled to the output terminal, and a second terminal of the capacitor 14 being coupled to a first point between the inverter 12 and the buffer 13 by means of the main current path of the transistor 15 and being coupled to a second point between the buffer 11 and the inverter 12 by means of the main current path of the transistor 16. The comparator 18 is coupled to the reference terminal 21 by means of the inverting input, to the output terminal 9 by means of the non-inverting input, and to the control electrode of the transistor 15 by means of the output, and the comparator 19 is coupled to the reference terminal 22 by means of the non-inverting input, to the output terminal 9 by means of the inverting input, and to the control electrode of the transistor 16 by means of the output. The comparator 20 and the transistor 17 play a central role in limiting the voltage on the output terminal 9. The comparator 20 is coupled to the reference terminal 23 by means of the non-inverting input, to the output terminal 9 by means of the inverting input, and to the control electrode of the transistor 15 by means of the output, and the transistor 15 is coupled between the second point and the supply terminal 4 by means of the main current path. In the present embodiment the output transistors 1 and 2 form an analog output stage with capacitive feedback, which output stage in normal operation supplies a current to the load, the current flowing either from the supply terminal 3 to the output terminal 9 *via* the output transistor 1 or from the output terminal 9 to the supply terminal 4. When the load comprises, for example, a first coil of a brushless motor, a second and a third coil of the motor being energized by means of similar units, the output transistors 1 and 2 are in the same state or in different states in dependence upon the first and the second signal on the input terminals 5 and 6, the output terminal 9 being connected to the positive or to the negative supply voltage. The present embodiment will now be further described on the basis of a situation in which the output transistor 1 supplies a current flowing through the load and the output transistor 2 is cut off. After the output transistor 1 has been turned off by a signal on the input terminal 5 *via* the buffer 10 the voltage on the output terminal 9 will exhibit an undesired voltage transient, during which voltage transient the voltage decreases. When a negative voltage appears on the output terminal 9 the output transistor 2 is operated inversely (drain becomes source and source becomes drain) and a (180 degree) phase shift occurs. For the stability of the unit and in order to preclude positive feedback the capacitor 14 should be disconnected in a currentless state of the output stage (1, 2) and should be coupled to a point at an inverse voltage in the control stage, which point carries a voltage with a (180 degree) phase shift. The capacitor 14 should be disconnected and coupled before the output transistor 2 is turned on. In the present embodiment this is achieved by means of the comparators 18, 19 and 20. When the voltage becomes smaller than the reference voltage on the reference terminal 21 (for example - 100 mV) the comparator 18 turns off the transistor 15, as a result of which off-state the capacitor 14 is disconnected from the first stage in the control stage CC. When the voltage becomes smaller than the reference voltage on the reference terminal 22 (for example -150 mV) the comparator 19 turns on the transistor 16, as a result of which on-state the capacitor 14 is coupled to the second point in the control stage CC. Since the first and the second point are coupled by means of the inverter 12 the required (180 degree) phase shift is obtained. When the voltage becomes smaller than the reference voltage on the reference terminal 22 (fore example -200 mV) the comparator 20 turns on the transistor 17, as a result of which the output transistor 2 is turned on and the voltage on the output terminal is limited to a level dictated by the conductance of the output transistor 2. If subsequently the voltage becomes higher than the reference voltage on the reference terminal 23, for example owing to an e.m.f. voltage in the load, the comparator 20 turns off the transistor 17, as a result of which the output transistor is cut off. When the voltage exceeds the reference voltage on the reference terminal 22 the comparator 19 turns off the transistor 16, as a result of which the capacitor 14 is disconnected from the second point in the control stage CC. When the voltage exceeds the reference voltage on the reference terminal 21 the comparator 18 turns on the transistor 15, as a result of which the capacitor 14 is coupled to the first point in the control stage CC. In the control stage CC the buffer 2 may be replaced by a circuit similar to the first and the second section, by means of which circuit the voltage on the output terminal 9 relative to the positive supply voltage can be limited, for example in order to prevent a breakdown voltage which is fatal to the integrated circuit from appearing on the output terminal.

The invention is not limited to the embodiments shown herein. Within the invention as defined in the following claims several modifications are conceivable to those skilled in the art. For example, the control stage may be of another construction than shown provided that the undesired voltage on the output terminal is limited to a voltage which differs from the relevant supply voltage by less than one diode voltage. Moreover, the stability of the control stage can be achieved in different ways, for example in such a way that the number of comparators being used can be reduced. Finally, it is to be noted that the transistors shown may be replaced by an equal or different number of bipolar transistors.

## Claims

1. An integrated circuit comprising a unit for controlling a load of an inductive nature, which unit comprises a first output transistor (1) having a first control electrode and a first main current path, a second output transistor (2) having a second control electrode and a second main current path, a control stage (CC) for controlling the output transistors, a first supply terminal (3) for receiving a first supply voltage, a second supply terminal (4) for receiving a second supply voltage, and an output terminal (9) for connecting the load, the first and the second control electrode being coupled to the control stage (CC), the first main current path being coupled between the first supply terminal (3) and the output terminal (9), and the second main current path being coupled between the output terminal (9) and the second supply terminal (4), characterised in that the control stage (CC) is coupled to the output terminal (9) and is adapted to detect a first voltage transient on the output terminal (9), to turn on the second transistor (2) in response to the first voltage transient, to detect a second voltage transient on the output terminal (9), which second voltage transient is opposed to the first voltage transient, and to turn off the second transistor (2) in response to the second voltage transient.

2. An integrated circuit comprising a unit for controlling a load of an inductive nature as claimed in Claim 1, characterised in that the control stage (CC) is further adapted to detect a third voltage transient on the output terminal (9), which third voltage transient is opposite to the first voltage transient, to turn on the first transistor (1) in response to the third voltage transient, to detect a fourth voltage transient on the output terminal (9), which fourth voltage transient is opposed to the third voltage transient, and to turn off the first transistor (1) in response to the fourth voltage transient.

3. An integrated circuit comprising a unit for controlling a load of an inductive nature as claimed in Claim 1 or 2, characterised in that the control stage (CC) further comprises a capacitor (14) having a first and a second terminal, the first terminal being coupled to the output terminal (9) and the second terminal being coupled to the second control electrode with a phase shifter or without a phase shifter depending upon a voltage appearing across the second output transistor (2).

4. An integrated circuit comprising a unit for controlling a load of an inductive nature as claimed in Claim 3, characterised in that the control stage (CC) further comprises a first comparator for detecting the voltage appearing across the second output transistor (2) and for controlling a first transistor (15) so as to switch over the second terminal.

5. An integrated circuit comprising a unit for controlling a load of an inductive nature as claimed in Claim 4, characterised in that the control stage (CC) further comprises a second comparator for detecting the voltage appearing across the second output transistor (2) and for controlling a second transistor (16) so as to switch over the second terminal.

6. An integrated circuit comprising a unit for controlling a load of an inductive nature as claimed in Claim 1, 2, 3, 4 or 5, characterised in that the control stage (CC) further comprises a further comparator (20) for detecting the first voltage transient and for controlling a further transistor (17) so as to turn on the second output transistor (2).

7. An integrated circuit comprising a unit for controlling a load of an inductive nature as claimed in Claim 6, characterised in that the further comparator (20) is further adapted to detect the second voltage transient and to control the further transistor (17) so as to turn off the second output transistor (2).

8. Am integrated circuit comprising a unit for controlling a load of an inductive nature as claimed in Claim 1, 2, 3, 4, 5, 6 or 7, characterised in that the unit further comprises a first diode (7) and a second diode (8), which first diode is coupled between the first supply terminal (3) and the output terminal (9) and which second diode is coupled between the output terminal (9) and the second supply terminal (4).

## Patentansprüche

1. Integrierte Schaltung mit einer Einheit zur Steuerung einer Last mit induktivem Charakter, wobei diese Einheit einen ersten Ausgangstransistor (1) mit einer ersten Steuerelektrode und einem ersten Hauptstrompfad umfaßt, einen zweiten Ausgangstransistor (2) mit einer zweiten Steuerelektrode und einem zweiten Hauptstrompfad, eine Regelstufe (CC) zur Steuerung der Ausgangstransistoren, eine erste Versorgungsklemme (3) zum Empfangen einer ersten Versorgungsspannung, eine zweite Versorgungsklemme (4) zum Empfangen einer zweiten Versorgungsspannung, und eine Ausgangsklemme (9) zum Anschließen der Last, wobei die erste und die zweite Steuerelektrode mit der Regelstufe (CC) gekoppelt sind, der erste Hauptstrompfad zwischen die erste Versorgungsklemme (3) und die Ausgangsklemme (9) geschaltet ist und der zweite Hauptstrompfad zwischen die Ausgangsklemme (9) und die zweite Versorgungsklemme (4) geschaltet ist, dadurch gekennzeichnet, daß die Regelstufe (CC) mit der Ausgangsklemme (9) gekoppelt ist und eingerichtet ist, einen ersten Spannungssprung an der Ausgangsklemme (9) zu detektieren, den zweiten Transistor (2) in Reaktion auf den ersten Spannungssprung in Leitung zu bringen, einen dem ersten Spannungssprung entgegengesetzten, zweiten Spannungssprung an der Ausgangsklemme (9) zu detektieren und den zweiten Transistor (2) in Reaktion auf den zweiten Spannungssprung in den Sperrzustand zu bringen.

2. Integrierte Schaltung mit einer Einheit zur Steuerung einer Last mit induktivem Charakter nach Anspruch 1, dadurch gekennzeichnet, daß die Regelstufe (CC) weiterhin eingerichtet ist, einen dem ersten Spannungssprung entgegengesetzten, dritten Spannungssprung an der Ausgangsklemme (9) zu detektieren, den ersten Transistor (1) in Reaktion auf den dritten Spannungssprung in Leitung zu bringen, einen dem dritten Spannungssprung entgegengesetzten, vierten Spannungssprung an der Ausgangsklemme (9) zu detektieren und den ersten Transistor (1) in Reaktion auf den vierten Spannungssprung in den Sperrzustand zu bringen.

3. Integrierte Schaltung mit einer Einheit zur Steuerung einer Last mit induktivem Charakter nach Anspruch 1 oder 2, dadurch gekennzeichnet, daß die Regelstufe (CC) weiterhin einen Kondensator (14) mit einer ersten und einer zweiten Klemme umfaßt, wobei die erste Klemme mit der Ausgangsklemme (9) gekoppelt ist und die zweite Klemme in Abhängigkeit von einer am zweiten Ausgangstransistor (2) auftretenden Spannung mit einem Phasenschieber oder ohne einen Phasenschieber mit der zweiten Steuerelektrode gekoppelt ist.

4. Integrierte Schaltung mit einer Einheit zur Steuerung einer Last mit induktivem Charakter nach Anspruch 3, dadurch gekennzeichnet, daß die Regelstufe (CC) weiterhin einen ersten Komparator umfaßt zum Detektieren der am zweiten Ausgangstransistor (2) auftretenden Spannung und zum Steuern eines ersten Transistors (15), um die zweite Klemme umzuschalten.

5. Integrierte Schaltung mit einer Einheit zur Steuerung einer Last mit induktivem Charakter nach Anspruch 4, dadurch gekennzeichnet, daß die Regelstufe (CC) weiterhin einen zweiten Komparator umfaßt zum Detektieren der am zweiten Ausgangstransistor (2) auftretenden Spannung und zum Steuern eines zweiten Transistors (16), um die zweite Klemme umzuschalten.

6. Integrierte Schaltung mit einer Einheit zur Steuerung einer Last mit induktivem Charakter nach Anspruch 1, 2, 3, 4 oder 5, dadurch gekennzeichnet, daß die Regelstufe (CC) weiterhin einen weiteren Komparator (20) umfaßt zum Detektieren des ersten Spannungssprungs und zum Steuern eines weiteren Transistors (17), um den zweiten Ausgangstransistor (2) in Leitung zu bringen.

7. Integrierte Schaltung mit einer Einheit zur Steuerung einer Last mit induktivem Charakter nach Anspruch 6, dadurch gekennzeichnet, daß der weitere Komparator (20) weiterhin eingerichtet ist, den zweiten Spannungssprung zu detektieren und den weiteren Transistor (17) zu steuern, um den zweiten Ausgangstransistor (2) in den Sperrzustand zu bringen.

8. Integrierte Schaltung mit einer Einheit zur Steuerung einer Last mit induktivem Charakter nach Anspruch 1, 2, 3, 4, 5, 6 oder 7, dadurch gekennzeichnet, daß die Einheit weiterhin eine erste Diode (7) und eine zweite Diode (8) umfaßt, wobei die erste Diode zwischen die erste Versorgungsklemme (3) und die Ausgangsklemme (9) geschaltet ist und die zweite Diode zwischen die Ausgangsklemme (9) und die zweite Versorgungsklemme (4) geschaltet ist.

## Revendications

1. Circuit intégré muni d'une unité pour régler une charge de nature inductive, laquelle unité est munie d'un premier transistor de sortie (1) présentant une première électrode de réglage et un premier trajet de courant principal, d'un deuxième transistor de sortie (2) présentant une deuxième électrode de réglage et un deuxième trajet de courant principal, d'un étage de réglage (CC) pour le réglage des transistors de sortie, d'une première borne d'alimentation (3) pour recevoir une première tension d'alimentation, d'une deuxième borne d'alimentation (4) pour recevoir une deuxième tension d'alimentation et d'une borne de sortie (9) pour connecter la charge, les première et deuxième électrodes de réglage étant couplées à l'étage de réglage (CC), le premier trajet de courant principal étant couplé entre la première borne d'alimentation (3) et la borne de sortie (9) et le deuxième trajet de courant principal étant couplé entre la borne de sortie (9) et la deuxième borne d'alimentation (4), caractérisé en ce que l'étage de réglage (CC) est couplé à la borne de sortie (9) et est conçu pour détecter une première transition de tension à la borne de sortie (9) pour commander le deuxième transistor (2) en état de conduction en réponse à la première tension de tension, pour détecter une deuxième transition de tension à la borne de sortie (9), laquelle deuxième transition de tension est opposée à la première transition de tension et pour commander le deuxième transistor (2) en état de blocage en réponse à la deuxième transition de tension.

2. Circuit intégré muni d'une unité pour régler une charge de nature inductive selon la revendication 1, caractérisé en ce que l'étage de réglage (CC) est en outre conçu pour détecter une troisième transition de tension à la borne de sortie (9), laquelle troisième transition de tension est opposée à la première transition de tension, pour commander le premier transistor (1) en un état de conduction en réponse à la troisième transition de tension, pour détecter une quatrième transition de tension à la borne de sortie (9), laquelle quatrième transition de tension est opposée à la troisième transition de tension, et pour commander le premier transistor (1) en état de blocage en réponse à la troisième transition de tension.

3. Circuit intégré muni d'une unité pour régler une charge de nature inductive selon la revendication 1 ou 2, caractérisé en ce que l'état de réglage (CC) est en outre muni d'un condensateur (14) présentant une première borne et une deuxième borne, la première borne étant couplée à la borne de sortie (9) et la deuxième borne étant couplée à la deuxième électrode de réglage avec un décaleur de phase ou sans décaleur de phase suivant la tension apparaissant aux bornes du deuxième transistor de sortie (2).

4. Circuit intégré muni d'une unité pour régler une charge de nature inductive selon la revendication 3, caractérisé en ce que l'étage de réglage (CC) est en outre muni d'un premier comparateur pour détecter la tension apparaissant aux bornes du deuxième transistor de sortie (2) et pour régler un premier transistor (15) de façon à passer à la deuxième borne.

5. Circuit intégré muni d'une unité pour régler une charge de nature inductive selon la revendication 4, caractérisé en ce que l'étage de réglage (CC) est en outre muni d'un deuxième comparateur pour détecter la tension apparaissant aux bornes du deuxième transistor de sortie (2) et pour régler un deuxième transistor (16) de façon à passer à la deuxième borne.

6. Circuit intégré muni d'une unité pour régler une charge de nature inductive selon la revendication 1, 2, 3, 4 ou 5, caractérisé en ce que l'étage de réglage (CC) est en outre muni d'un autre comparateur (20) pour détecter la première transition de tension et pour régler un autre transistor (17) de façon à commander le deuxième transistor de sortie (2) en état de conduction.

7. Circuit intégré muni d'une unité pour régler une charge de nature inductive selon la revendication 6, caractérisé en ce que l'autre comparateur (20) est en outre conçu pour détecter la deuxième transition de tension et pour régler l'autre transistor (17) de façon à commander le deuxième transistor de sortie (2) en état de blocage.

8. Circuit intégré muni d'une unité pour régler une charge de nature inductive selon la revendication 1, 2, 3, 4, 5, 6 ou 7, caractérisé en ce que l'unité est en outre munie d'une première diode (7) et d'une deuxième diode (8), laquelle première diode est couplée entre la première borne d'alimentation (3) et la borne de sortie (9) et laquelle deuxième diode est couplée entre la borne de sortie (9) et la deuxième borne d'alimentation (4).
